# EUROPEAN PATENT SPECIFICATION

(11) **EP 2 778 396 B1**
(45) Date of publication and mention of the grant of the patent: **30.09.2020**
(21) Application number: 13159059.8
(22) Date of filing: 13.03.2013
(51) Int. Cl.: F03D 7/02

(54) **Hydraulic braking system, wind generator comprising a hydraulic braking system and use of an automatic air bleed valve in a hydraulic braking system**
Hydraulisches Bremssystem, Windgenerator mit einem hydraulischen Bremssystem und Verwendung eines automatischen Entlüftungsventils in einem hydraulischen Bremssystem
Système de freinage hydraulique, générateur éolien comprenant un système de freinage hydraulique et utilisation d'une soupape de purge d'air automatique dans un tel système de freinage

(43) Date of publication of application: 17.09.2014
(73) Proprietor: Adwen GmbH, 27572 Bremerhaven (DE)
(72) Inventor: Peper, Torsten, 27726 Worpswede (DE)
(74) Representative: Aspacher, Karl-Georg

(56) References cited:
- EP-A2- 2 267 304
- CN-A- 101 033 733
- DE-A1-102010 054 153
- DE-U1- 20 017 994
- US-A- 1 700 394
- US-A- 5 853 071

## Description

### FIELD OF THE INVENTION

The invention relates to a hydraulic braking system for braking of a shaft of a wind generator. Furthermore, the invention relates to wind generator comprising a hydraulic braking system for braking of a shaft, which is coupled to a rotor hub. The invention also relates to the use of an automatic air bleed valve in a hydraulic braking system for braking of a shaft of a wind generator.

### BACKGROUND

In hydraulic braking systems, which are used irregularly or rarely, it is likely that small amounts of air enter the hydraulic braking circuit. This is particularly true for hydraulic braking systems, which are applied for braking of the shaft of a wind generator (also referred to as a wind energy converter, a wind turbine or a wind power plant). These braking systems are used when the rotor of the wind generator has to be stopped completely. Firstly, the rotation of the wind generator is slowed down by pitching down the blades. Secondly, the braking system is used to decelerate the remaining rotation, for example during an emergency stop of the wind turbine.

In hydraulic braking systems, a negative fluidic pressure of a liquid column of hydraulic fluid is applied to allow brake pads to distance from a brake disc. This negative fluidic pressure, however, sucks in small amounts of air into the hydraulic circuit. This small amount of air may cause a functional test of the braking system, which is performed in regular intervals, to fail. Error messages may occur indicating that the hydraulic braking circuit may not be closed completely. To avoid these error messages, the service team is urged to bleed the hydraulic braking circuit of the braking system in regular intervals. This is typically performed manually and causes considerable service expenses. This is particularly true for braking systems in offshore wind generators. In order to avoid these technical problems, a decentralized hydraulic braking system may be applied. This, however, represents a costly solution.

US 5,853,071 discloses a bleed valve for bleeding fluid from a hydraulic braking circuit. The bleed valve is accessible in tight space and indicates to the operator whether the hydraulic braking circuit is inactive or active. The bleed valve is self-closing to eliminate the risk of the valve being opened when the hydraulic braking circuit is activated. The bleed valve is especially configured to prevent opening when the hydraulic system is under pressure which makes it impossible to open the bleed valves when the system is pressurized.

EP 2 267 304 A2 discloses a hydraulic system and method for operating a brake of a wind turbine. The system employs various check valves within the fluidic connections of the brake system. This is disadvantageous.

Document CN101033733 discloses a wind generator comprising a spring-applied, hydraulically released braking system.

### SUMMARY

It is an object of the invention to provide an improved hydraulic braking system, an improved wind generator comprising a hydraulic braking system and the improved use of an automatic air bleed valve in a hydraulic braking system.

The object is achieved by the subject matter of claim 1.

In one aspect of the invention, a hydraulic braking system for braking of a shaft of a wind generator is provided. A hydraulic braking circuit of the braking system comprises an automatic air bleed valve. This automatic air bleed valve is configured for bleeding the hydraulic circuit.

Traditionally, in the technical field of hydraulic braking systems, automatic air bleed valves are not applied. However, it has been recognized that the reliability of modern automatic air bleed valves is comparable to the level of reliability of manual bleeding valves, which are frequently used in hydraulic braking systems. The invention overcomes a technical prejudice and integrates an automatic air bleed valve in the hydraulic braking circuit of a hydraulic braking system. Manual bleeding of the hydraulic braking system is no longer necessary. This significantly reduces the operational costs. The hydraulic braking system is particularly advantageous for braking of a shaft of a wind generator. Shaft braking systems in wind generators are not used very frequently. It is likely that small amounts of air enter the hydraulic braking circuit. Unlike the prior art, no frequent bleeding of the hydraulic braking circuit is necessary. The hydraulic braking system according to aspects of the invention is automatically bled upon pressurization of the hydraulic fluid. In particular for braking systems in offshore wind generators this will significantly reduce the service expenses.

According to the invention, the hydraulic braking system comprises a hydraulic unit, which supplies a high pressure part of the hydraulic braking circuit with a pressurized hydraulic fluid to operate at least one brake caliper. In particular, the at least one brake caliper may cooperate with a brake disc, which may be coupled to a shaft of the wind generator. Furthermore, the automatic air bleed valve is integrated in the high pressure part of the hydraulic braking circuit. Advantageously, a central hydraulic braking system having reduced operational costs may be provided. A costly and elaborate decentralized braking system is not required.

Furthermore, according to the invention, the hydraulic unit and at least one of the brake calipers are arranged at different heights. Within the context of this specification, the terms "higher" and "lower", "above" and "below" are used with respect to the earth's gravity field. In other words, a first part, which is arranged above a second part, is located at a greater geodetic height than the first part. In particular, at least one of the brake calipers is / are arranged above the hydraulic unit. According to an advantageous embodiment of the invention, a height difference between the highest brake caliper and the hydraulic unit is greater than 2 m, 3 m or 4 m. In particular, the height difference may be greater than 4,5 m. A hydraulic fluid, which resides in the vertical pipes of the hydraulic braking circuit, causes a negative fluidic pressure at the higher brake calipers. This negative fluidic pressure is due to the weight of the hydraulic fluid. This is necessary to allow the brake pads to retract from the brake disc and to allow free rotation of the latter. However, due to this negative fluidic pressure, it is likely that small amounts of air enter the hydraulic braking circuit. This is, however, no longer a technical problem because the air is bled from the hydraulic braking circuit via the automatic air bleed valve, when the braking circuit is pressurized again. Advantageously, even when the hydraulic braking system is operated irregularly or rarely, no regular service intervals have to be scheduled.

According to an advantageous embodiment of the invention, the automatic air bleed valve is arranged at the highest brake caliper. In particular, the automatic air bleed valve may be arranged at the highest section of the hydraulic circuit. It may be expected that air, which enters the hydraulic braking circuit, accumulates at a highest point. Consequently, the automatic air bleed valve, which is arranged at this point, is likely to bleed the hydraulic circuit efficiently.

According to another advantageous aspect of the invention, the hydraulic braking circuit provides a direct and continuous fluidic connection between the hydraulic unit and the at least one brake caliper. In particular, the hydraulic braking circuit provides a fluidic connection between the hydraulic unit and the brake caliper, which does not comprise a check valve. This direct and continuous fluidic connection may be in the high pressure part of the hydraulic circuit. The fluidic connection between the hydraulic unit and the brake calipers is uninterruptible, in particular not by a check valve. The application of a check valve may be a suitable measure to reduce the negative hydraulic pressure at the higher brake calipers. The check valves may hinder the hydraulic fluid from flowing back inside the vertical sections of the hydraulic braking circuit. However, if a check valve is integrated for example in a supply pipe of a brake caliper, this may cause a high residual pressure at the brake caliper, even when the braking circuit is depressurized. This residual fluidic pressure may be too high for a complete retraction of the brake pads from the brake disc. On the other hand, if the residual pressure is adjusted to a small value, the negative fluidic pressure at the brake caliper may still be too high to avoid entrance of air into the hydraulic circuit. Advantageously, the hydraulic braking system according to aspects of the invention fully dispenses with check valves and the technical problems involved.

In an advantageous embodiment of the invention, the hydraulic braking system is configured to be arranged in a nacelle of a wind generator. The hydraulic braking system comprises a single hydraulic unit and a plurality of brake calipers cooperating with a brake disc, which is coupled to a shaft of the wind generator. The plurality of brake calipers is operated using the single hydraulic unit to provide a central braking system for the shaft. Since the maintenance and service costs for the hydraulic braking system according to aspects of the invention are very low, the system perfectly fits with the requirements of hydraulic braking systems in offshore wind generators.

According to an embodiment of the invention, the hydraulic braking system comprises a plurality of automatic air bleed valves, wherein the automatic air bleed valves are arranged above the hydraulic unit.

The braking circuit of the hydraulic braking system may comprise a plurality of sections at which air is likely to accumulate. A respective one of these sections is arranged relatively higher when compared to parts of the braking circuit, which are adjacent to this section. An automatic air bleed valve may be arranged at a respective one of theses sections of the braking circuit.

In another embodiment of the invention, the hydraulic braking system comprises a braking circuit, which is a multiple braking circuit. For example, the braking circuit may be a dual braking circuit. The multiple braking circuit may comprise at least a first braking circuit and a second braking circuit. A respective one of the braking circuits comprises at least one brake caliper and an automatic air bleed valve.

Furthermore, the hydraulic braking system is a disk braking system, according to another embodiment of the invention. The system has a plurality of brake calipers, which cooperate with the brake disk. The brake calipers may be equally spaced around the brake disk, wherein brake calipers of the first braking circuit and the second braking circuit may be arranged opposite to each other with respect the braking disk.

According to another aspect of the invention, a wind generator according to claim 10

Furthermore, the wind generator may be configured to have a hydraulic braking system, which comprises a plurality of brake calipers cooperating with a brake disc, which is coupled to the shaft. In particular, the brake calipers may be equally spaced around the brake disk. The plurality of brake calipers is operated by a single hydraulic unit to provide an economic central braking system of the shaft.

In particular, the hydraulic unit and at least one of the break calipers are arranged at different heights. According to the invention, the at least one brake caliper is arranged above the hydraulic unit and the automatic air bleed valve may be arranged at this highest brake caliper. In particular, a height difference between a highest brake caliper and the hydraulic unit may be greater than 2 m, 3 m or 4 m and in particular greater than 4,5 m. In particular, the hydraulic braking system comprises a plurality of brake calipers and the highest brake caliper has a height difference with respect to the hydraulic units, which is greater than 2 m, 3 m or 4 m, in particular greater than 4,5 m.

According to another advantageous aspect of the invention, the wind generator is configured to have a hydraulic braking system applying a hydraulic braking circuit, which has a direct and continuous fluidic connection between the hydraulic unit and the brake calipers. In particular, the hydraulic braking circuit may provide a fluidic connection between the hydraulic unit and the brake calipers, which does not comprise a manual check valve.

The hydraulic system of the wind generator may comprise a plurality of automatic air bleed valves, which are arranged above the hydraulic unit.

In another embodiment of the invention, the wind generator comprises a braking circuit, which is a multiple braking circuit. This multiple braking circuit comprises at least a first braking circuit and a second braking circuit. A respective one of the braking circuits comprises at least one brake caliper and an automatic air bleed valve.

The wind generator may further have a hydraulic braking system, which is a disk braking system comprising a plurality of brake calipers. These cooperate with the brake disk and are equally spaced around the brake disk. The brake calipers of the first braking circuit and the brake calipers of the second braking circuit may be arranged opposite to each other with respect to the braking disk.

Same or similar advantages, which have been mentioned with respect to the hydraulic braking system, apply to the wind generator according to aspects of the invention in a same or similar way and are therefore not repeated.

### BRIEF DESCRIPTION OF DRAWINGS

Further aspects and features of the invention ensue from the following description of the preferred embodiments of the invention with reference to the accompanying drawings, wherein
FIG.1 is a simplified perspective view of a wind generator according to an embodiment of the invention and
FIG. 2 is a simplified side view showing a machine housing of the wind generator, wherein a hydraulic braking system according an embodiment of the invention is integrated in the machine housing.
FIGs. 3 to 5 are further simplified views showing further hydraulic braking systems according to embodiments of the invention.

### DETAILED DESCRIPTION OF EXAMPLE EMBODIMENTS

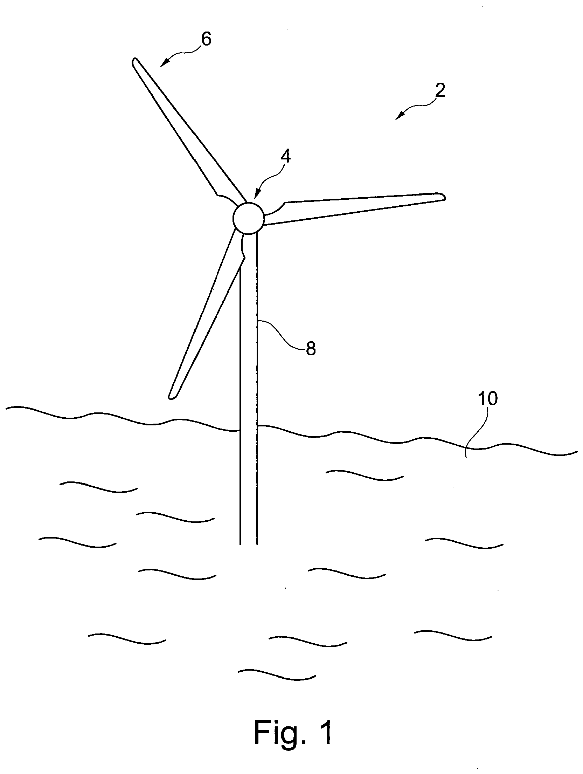

FIG. 1 is a simplified perspective view of a wind generator 2. By way of an example only, the wind generator is an offshore wind generator 2. It comprises a rotor hub 4 carrying the rotor blades 6, wherein the rotor hub 4 is coupled to a main shaft of the wind generator 2. A supporting structure 8 carries a nacelle (not visible) and is supported by an underwater foundation in the sea 10.

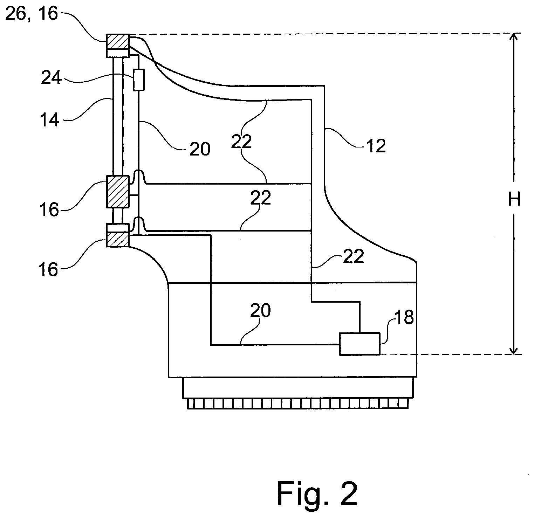

In FIG. 2, there is a simplified side view showing a machine housing 12, which is typically arranged in the nacelle of the wind generator 2. A braking disc 14 is coupled to the main shaft (not shown). The rotation of the rotor hub 4, which is coupled to this main shaft, is decelerated by pitching down the rotor blades 6 to their feathering position first. The brake disc 14 is applied when the wind generator 2 has to be stopped completely, for example during an emergency shut down. For decelerating the rotation of the main shaft, the brake disc 14 cooperates with brake calipers 16. As it is known from disc brakes, the brake calipers 16 are configured to push brake pads against the brake disc 14 for deceleration thereof.

The brake calipers 16 together with the brake disc 14 form part of a hydraulic braking system, which further comprises a hydraulic unit 18. The hydraulic unit 18 may comprise a hydraulic pump, which supplies a high pressure part 20 of a hydraulic circuit with a pressurized hydraulic fluid, for example with hydraulic oil. The hydraulic fluid is returned to the hydraulic unit 18 via return pipes 22, which represent a further part of the hydraulic braking circuit. A single hydraulic unit 18 supplies a plurality of brake calipers 16, which means the hydraulic braking system is a central braking system. Each brake caliper 16 is coupled to the pressurized part 20 and to the return pipes 22 of the hydraulic circuit.

In wind generators 2, the hydraulic braking system is used very rarely. However, during the long downtime, it cannot be avoided that small amounts of air enter the hydraulic braking circuit, in particular at the brake calipers 16. As a traditional countermeasure to this, the hydraulic circuit is bled in regular service intervals. The hydraulic system according to the embodiment of the invention, however, comprises an automatic air bleed valve 24 for bleeding of the system. The automatic air bleed valve 24 is integrated in the pressurized part 20 of the hydraulic braking circuit. When the hydraulic braking circuit is pressurized again, the accumulate air escapes from the hydraulic braking circuit via the automatic air bleed valve 24.

Automatic air bleed valves 24 and their working principle are commonly known. It is based on the difference in behavior of gases and liquids under pressure because of their dependence on viscosity. Typically, an automatic air bleed valve 24 comprises a piston, which is housed in a bore of a body with a defined clearance between the two parts. This causes the opening and closing of the automatic air bleed valve 24 on start up or shut down of the system. When the pressure of the hydraulic fluid rises, accumulated air in the hydraulic braking circuit escapes until the liquid column of the hydraulic fluid reaches the piston of the automatic air bleed valve 24. The pressure of the hydraulic fluid lifts the piston against an upper high pressure seal, securely closing the air vent. A retraction spring and the special piston design, which is known for air bleed valves, prevent any intake of air, when the pressure of the hydraulic fluid decreases or even reaches a partial vacuum, i.e. a negative fluidic pressure.

Traditionally, automatic air bleed valves 24 are not applied in braking systems. However, this turned out to be a technical prejudice. Automatic air bleed valves 24 are suitable for hydraulic braking systems because the reliability of modern air bleed valves 24 is comparably high as the reliability of manual bleeding valves, which are frequently used in hydraulic braking systems.

In the hydraulic braking system of FIG. 2, the brake calipers 16 are arranged above the hydraulic unit 18. A height difference H between the highest brake caliper 26 and the hydraulic unit 18 may be greater than 2 m, 3 m or 4 m. According to the embodiment of FIG. 2, the height difference H is approximately 4,5 m. When the hydraulic unit 18 is switched off and the pressurized part 20 of the hydraulic circuit is de-pressurized, a weight of the vertical fluid column causes a negative hydraulic pressure at the highest brake caliper 26. This negative hydraulic pressure is necessary to allow the brake pads of the brake calipers 16 to retract from the brake disc 14. However, this partial vacuum causes small amounts of air to enter the hydraulic braking circuit. These are, however, bled from the circuit via the air bleed valve 24.

According to the embodiment of FIG. 2, the automatic air bleed valve 24 is arranged at the highest brake caliper 26. Generally, the automatic air bleed valve 24 may be arranged at an arbitrary position in the hydraulic braking circuit. It may be advantageous that the air bleed valve 24 be arranged at a position of the system at which air accumulates. Typically, this may be one of the highest parts of the hydraulic circuit.

Furthermore, the hydraulic braking circuit is configured to have a direct and continuous fluidic connection between the hydraulic unit 18 and the brake calipers 16. In particular, the hydraulic braking circuit does not comprise any check valves. Check valves may be suitable to reduce the negative pressure of the liquid column of the hydraulic fluid. However, this limits the negative pressure at the higher brake calipers 16. The partial vacuum may not be sufficient for complete retraction of the brake pads from the brake disc 14.

The hydraulic braking system is configured to be arranged in a nacelle of the wind generator 2. The use of the automatic air bleed valve 24 is advantageous in that the braking system causes reduced maintenance costs due to its automatic bleeding functionality.

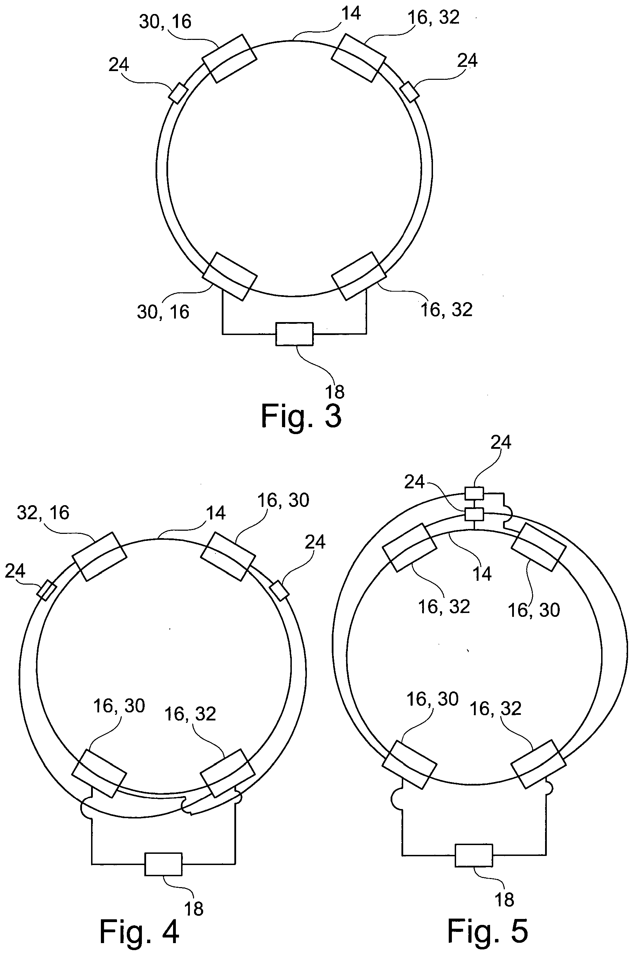

FIGs. 3 to 5 are simplified views showing further embodiments of the hydraulic braking system. The braking circuit is a multiple braking circuit, in particular a dual braking circuit. In FIG. 3, the brake calipers 30, shown on the left, are a part of the first braking circuit. The braking calipers 32 are a part of the second braking circuit. Due to simplification of the drawings, the brake calipers are connected via a single pipe, which represents the high pressure supply pipe and the return pipe as well. The brake calipers 16 are equally spaced around the brake disk 14. Both braking circuits may be supplied using a same and single hydraulic unit 18. The first braking circuit and the second braking circuit are each provided with an automatic air bleed valve 24.

In FIGs. 4 and 5, there are further simplified views showing embodiments of the hydraulic braking system. The brake calipers 30 of the first braking circuit are arranged to be opposite to each other with respect to the brake disk 14. Similarly, the brake calipers 32 of the second braking circuit are arranged to be opposite to each other with respect to the brake disk 14. The may be arranged opposite with respect to the center of the brake disk 14. The brake calipers 16 in the hydraulic braking system shown in FIG. 5 are similarly arranged. According to the embodiment of FIG. 4, the automatic air bleed valves 24 are arranged at the highest brake caliper 14 of the first and second braking circuit, respectively. The hydraulic braking circuits shown in FIG. 5 have sections, which are arranged relatively higher when compared to parts of the braking circuit, which are adjacent to these sections. The automatic air bleed valves 24 are arranged at threse highest points or sections of the braking circuits for bleeding air, which is likely to accumulate at this highest points of the hydraulic circuit. Similar to the hydraulic braking system in FIG. 3, the first and second braking circuit may be supplied using a single hydraulic unit 18. According to other embodiments of the invention, two separate hydraulic units 14 may be applied for supplying the first and second braking circuit, respectively (not shown). This aspect advantageously applies to all embodiments shown in FIGs. 3 to 5.

## Claims

1. A hydraulic braking system for braking of a shaft of a wind generator (2), comprising a hydraulic braking circuit of the braking system comprising at least one automatic air bleed valve (24) and a hydraulic unit (18), which supplies a high pressure part of the hydraulic braking circuit with a pressurized hydraulic fluid to operate at least one brake caliper (16), wherein the automatic air bleed valve (24) is integrated in the high pressure part of the hydraulic braking circuit and the hydraulic unit (18) and the at least one of the brake caliper (16) are arranged at different heights **characterized in that** the at least one brake caliper (16) is arranged at a geodetic height that is greater than the hydraulic unit (18).

2. The hydraulic braking system according to claim 1, comprising a plurality of brake calipers (16), wherein a height difference between a highest brake caliper (16) and the hydraulic unit is greater than 2 m, 3 m or 4 m and in particular greater than 4,5 m.

3. The hydraulic braking system according to claim 2, wherein the automatic air bleed valve (24) is arranged at the highest brake caliper (26).

4. The hydraulic braking system according to anyone of the preceding claims, comprising a plurality of automatic air bleed valves (24), wherein the automatic air bleed valves (24) are arranged above the hydraulic unit (18).

5. The hydraulic braking system according to claim 4, wherein the braking circuit comprises a plurality of sections, wherein a respective of these sections is arranged relatively higher when compared to parts of the braking circuit, which are adjacent to the section, and air is likely to accumulate in the section of the braking circuit, wherein an automatic air bleed valve (24) is arranged at a respective one of these sections of the braking circuit.

6. The hydraulic braking system according to claim 4 or 5, wherein the
braking circuit is a multiple braking circuit comprising at least a first braking circuit and a second braking circuit, wherein a respective one of the braking circuits comprises at least one brake caliper (16, 30, 32) and an automatic air bleed valve (24).

7. The hydraulic braking system according to claim 6, wherein the hydraulic braking system is a disk braking system having a plurality of brake calipers (16, 30, 32), which cooperate with the braking disk (14), wherein the brake calipers (16, 30, 32) are equally spaced around the braking disk (14), and wherein brake calipers (30, 32) of the first braking circuit and the second braking circuit are arranged to be opposite to each other with respect the braking disk (14).

8. The hydraulic braking system according to anyone of the preceding claims, wherein the hydraulic braking circuit provides a direct and continuous fluidic connection between the hydraulic unit (18) and the at least one brake caliper (24), in particular, the hydraulic braking circuit provides a fluidic connection between the hydraulic unit (18) and the at least one brake caliper (24), which does not comprise a manual check valve.

9. The hydraulic braking system according to anyone of the preceding claims, wherein the hydraulic braking system is configured to be arranged in a nacelle of a wind generator, and wherein the hydraulic braking system comprises a single hydraulic unit (18) and a plurality of brake calipers (16, 30, 32) cooperating with a brake disk (14), which is coupled to a shaft of the wind generator, wherein the plurality of brake calipers (16, 30, 32) is operated using the single hydraulic unit (18) to provide a central braking system of the shaft.

10. A wind generator comprising a shaft, which is coupled to a rotor hub, **characterized by** a hydraulic braking system according to anyone of the preceding claims.

11. The wind generator according to claim 10, having a hydraulic braking system comprising a plurality of brake calipers cooperating with a brake disk, which is coupled to the shaft, wherein the plurality of brake calipers is operated using a single hydraulic unit to provide a central braking system of the shaft.

12. The wind generator according to claim 11, wherein the plurality of brake calipers (16, 30, 32) is equally spaced around the brake disk (14).

13. The wind generator according to claim 10, comprising a plurality of brake calipers (16, 30, 32), wherein the automatic air bleed valve (24) is arranged at the highest brake caliper (30, 32) and, in particular, a height difference between the highest brake caliper (30, 32) and the hydraulic unit is greater than 2 m, 3 m or 4 m and in particular greater than 4,5 m.

14. The wind generator according to claim 10, comprising a plurality of automatic air bleed valves (24), which are arranged above the hydraulic unit (18).

15. The wind generator according to claim 14, wherein the braking circuit is a multiple braking circuit comprising at least a first braking circuit and a second braking circuit, wherein a respective one of the braking circuits comprises at least one brake caliper (16, 30, 32) and an automatic air bleed valve (24).

16. The wind generator according to claim 15, wherein the hydraulic braking system is a disk braking system having a plurality of brake calipers (16, 30, 32), which cooperate with the braking disk (14), wherein the brake calipers (16, 30, 32) are equally spaced around the braking disk (14), wherein the brake calipers (30) of the first braking circuit and the brake calipers (32) of the second braking circuit are arranged to be opposite to each other with respect to the braking disk (14).

17. The wind generator according to anyone of claims 10 to 16, wherein the hydraulic braking circuit provides a direct and continuous fluidic connection between the hydraulic (18) unit and the at least one brake caliper (16, 30, 32), in particular, the hydraulic braking circuit provides a fluidic connection between the hydraulic unit (18) and the at least one brake caliper (16, 30, 32), which does not comprise a manual check valve.

## Patentansprüche

1. Hydraulisches Bremssystem zum Bremsen einer Welle einer Windkraftanlage (2), das einen hydraulischen Bremskreis des Bremssystems umfasst, der mindestens ein automatisches Entlüftungsventil (24) und eine Hydraulikeinheit (18) umfasst, die einen Hochdruckteil des hydraulischen Bremskreises mit einem druckbeaufschlagten Hydraulikfluid zum Betreiben mindestens eines Bremssattels (16) versorgt, wobei das automatische Entlüftungsventil (24) in den Hochdruckteil des hydraulischen Bremskreises integriert ist und die Hydraulikeinheit (18) und der mindestens eine Bremssattel (16) auf unterschiedlicher Höhe angeordnet sind, **dadurch gekennzeichnet, dass** der mindestens eine Bremssattel (16) geodätisch höher liegt als die Hydraulikeinheit (18).

2. Hydraulisches Bremssystem nach Anspruch 1, das mehrere Bremssättel (16) umfasst, wobei ein Höhenunterschied zwischen einem am weitesten oben liegenden Bremssattel (16) und der Hydraulikeinheit mehr als 2 m, 3 m oder 4 m und insbesondere mehr als 4,5 m beträgt.

3. Hydraulisches Bremssystem nach Anspruch 2, wobei das automatische Entlüftungsventil (24) an dem am weitesten oben liegenden Bremssattel (26) angeordnet ist.

4. Hydraulisches Bremssystem nach einem der vorhergehenden Ansprüche, das mehrere automatische Entlüftungsventile (24) umfasst, wobei die mehreren automatischen Entlüftungsventile (24) über der Hydraulikeinheit (18) angeordnet sind.

5. Hydraulisches Bremssystem nach Anspruch 4, wobei der Bremskreis mehrere Abschnitte umfasst, wobei ein jeweiliger dieser Abschnitte im Vergleich zu Teilen des Bremskreises, die neben ihm liegen, höher angeordnet ist und sich wahrscheinlich Luft in dem Abschnitt des Bremskreises ansammelt, wobei ein automatisches Entlüftungsventil (24) an einem jeweiligen dieser Abschnitte des Bremskreises angeordnet ist.

6. Hydraulisches Bremssystem nach Anspruch 4 oder 5, wobei es sich bei dem Bremskreis um einen Mehrfachbremskreis handelt, der zumindest einen ersten und einen zweiten Bremskreis umfasst, wobei ein jeweiliger der Bremskreise mindestens einen Bremssattel (16, 30, 32) und ein automatisches Entlüftungsventil (24) umfasst.

7. Hydraulisches Bremssystem nach Anspruch 6, wobei es sich bei dem hydraulischen Bremssystem um ein Scheibenbremssystem mit mehreren Bremssätteln (16, 30, 32) handelt, die mit der Bremsscheibe (14) zusammenwirken, wobei die Bremssättel (16, 30, 32) gleichmäßig um die Bremsscheibe (14) herum beabstandet und Bremssättel (30, 32) des ersten und des zweiten Bremskreises so angeordnet sind, dass sie sich in Bezug auf die Bremsscheibe (14) gegenüberliegen.

8. Hydraulisches Bremssystem nach einem der vorhergehenden Ansprüche, wobei der hydraulische Bremskreis für eine direkte und beständige Fluidverbindung zwischen der Hydraulikeinheit (18) und dem mindestens einen Bremssattel (24), insbesondere für eine Fluidverbindung zwischen der Hydraulikeinheit (18) und dem mindestens einen Bremssattel (24) sorgt, die kein manuelles Sperrventil umfasst.

9. Hydraulisches Bremssystem nach einem der vorhergehenden Ansprüche, wobei das hydraulische Bremssystem so konfiguriert ist, dass es sich in einer Gondel einer Windkraftanlage anordnen lässt, und eine einzelne Hydraulikeinheit (18) und mehrere Bremssättel (16, 30, 32) umfasst, die mit einer Bremsscheibe (14) zusammenwirken, welche mit einer Welle der Windkraftanlage gekoppelt ist, wobei die mehreren Bremssättel (16, 30, 32) unter Verwendung der einzelnen Hydraulikeinheit (18) betrieben werden und so ein zentrales Bremssystem für die Welle bereitstellen.

10. Windkraftanlage mit einer Welle, die mit einer Rotornabe gekoppelt ist, **gekennzeichnet durch** ein hydraulisches Bremssystem nach einem der vorhergehenden Ansprüche.

11. Windkraftanlage nach Anspruch 10 mit einem hydraulischen Bremssystem, das mehrere Bremssättel umfasst, die mit einer Bremsscheibe zusammenwirken, welche mit der Welle gekoppelt ist, wobei die mehreren Bremssättel unter Verwendung einer einzelnen Hydraulikeinheit betrieben werden und so ein zentrales Bremssystem für die Welle bereitstellen.

12. Windkraftanlage nach Anspruch 11, wobei die mehreren Bremssättel (16, 30, 32) gleichmäßig um die Bremsscheibe (14) herum beabstandet sind.

13. Windkraftanlage nach Anspruch 10 mit mehreren Bremssätteln (16, 30, 32), wobei das automatische Entlüftungsventil (24) an dem am weitesten oben liegenden Bremssattel (30, 32) angeordnet ist und insbesondere ein Höhenunterschied zwischen dem am weitesten oben liegenden Bremssattel (30, 32) und der Hydraulikeinheit mehr als 2 m, 3 m oder 4 m und insbesondere mehr als 4,5 m beträgt.

14. Windkraftanlage nach Anspruch 10 mit mehreren automatischen Entlüftungsventilen (24), die über der Hydraulikeinheit (18) angeordnet sind.

15. Windkraftanlage nach Anspruch 14, wobei es sich bei dem Bremskreis um einen Mehrfachbremskreis handelt, der zumindest einen ersten und einen zweiten Bremskreis umfasst, wobei ein jeweiliger der Bremskreise mindestens einen Bremssattel (16, 30, 32) und ein automatisches Entlüftungsventil (24) umfasst.

16. Windkraftanlage nach Anspruch 15, wobei es sich bei dem hydraulischen Bremssystem um ein Scheibenbremssystem mit mehreren Bremssätteln (16, 30, 32) handelt, die mit der Bremsscheibe (14) zusammenwirken, wobei die Bremssättel (16, 30, 32) gleichmäßig um die Bremsscheibe (14) herum beabstandet sind, wobei die Bremssättel (30) des ersten und die Bremssättel (32) des zweiten Bremskreises so angeordnet sind, dass sie sich in Bezug auf die Bremsscheibe (14) gegenüberliegen.

17. Windkraftanlage nach einem der Ansprüche 10 bis 16, wobei der hydraulische Bremskreis für eine direkte und beständige Fluidverbindung zwischen der Hydraulikeinheit (18) und dem mindestens einen Bremssattel (16, 30, 32), insbesondere für eine Fluidverbindung zwischen der Hydraulikeinheit (18) und dem mindestens einen Bremssattel (16, 30, 32) sorgt, die kein manuelles Sperrventil umfasst.

## Revendications

1. Système de freinage hydraulique pour freiner un arbre de génératrice éolienne (2), comprenant un circuit de freinage hydraulique du système de freinage comprenant au moins une soupape de purge d'air automatique (24) et une unité hydraulique (18), qui alimente une partie haute pression du circuit de freinage hydraulique en fluide hydraulique sous pression pour actionner au moins un étrier de frein (16), dans lequel la soupape de purge d'air automatique (24) est intégrée dans la partie haute pression du circuit de freinage hydraulique et l'unité hydraulique (18) et l'au moins un étrier de frein (16) sont disposés à des hauteurs différentes, **caractérisé en ce que** l'au moins un étrier de frein (16) est disposé à une hauteur géodésique supérieure à la hauteur de l'unité hydraulique (18).

2. Système de freinage hydraulique selon la revendication 1, comprenant une pluralité d'étriers de frein (16), dans lequel une différence de hauteur entre un étrier de frein (16) le plus haut et l'unité hydraulique est supérieure à 2 m, 3 m ou 4 m, et en particulier supérieure à 4,5 m.

3. Système de freinage hydraulique selon la revendication 2, dans lequel la soupape de purge d'air automatique (24) est disposée au niveau de l'étrier de frein (26) le plus haut.

4. Système de freinage hydraulique selon l'une quelconque des revendications précédentes, comprenant une pluralité de soupapes de purge d'air automatique (24), dans lequel les soupapes de purge d'air automatique (24) sont disposées au-dessus de l'unité hydraulique (18).

5. Système de freinage hydraulique selon la revendication 4, dans lequel le circuit de freinage comprend une pluralité de sections, dans lequel l'une respective de ces sections est disposée relativement plus haut par rapport à des parties du circuit de freinage qui sont adjacentes à la section, et l'air est susceptible de s'accumuler dans la section du circuit de freinage, dans lequel une soupape de purge d'air automatique (24) est disposée au niveau de l'une respective de ces sections du circuit de freinage.

6. Système de freinage hydraulique selon la revendication 4 ou 5, dans lequel le circuit de freinage est un circuit de freinage multiple comprenant au moins un premier circuit de freinage et un deuxième circuit de freinage, dans lequel l'un respectif des circuits de freinage comprend au moins un étrier de frein (16, 30, 32) et une soupape de purge d'air automatique (24).

7. Système de freinage hydraulique selon la revendication 6, dans lequel le système de freinage hydraulique est un système de freinage à disque comprenant une pluralité d'étriers de frein (16, 30, 32) qui coopèrent avec le disque de freinage (14), dans lequel les étriers de frein (16, 30, 32) sont espacés de manière équidistante autour du disque de freinage (14), et dans lequel les étriers de frein (30, 32) du premier circuit de freinage et du deuxième circuit de freinage sont disposés de manière à être opposés l'un à l'autre par rapport au disque de freinage (14).

8. Système de freinage hydraulique selon l'une quelconque des revendications précédentes, dans lequel le circuit de freinage hydraulique fournit une connexion fluidique directe et continue entre l'unité hydraulique (18) et l'au moins un étrier de frein (24), en particulier le circuit de freinage hydraulique fournit une connexion fluidique entre l'unité hydraulique (18) et l'au moins un étrier de frein (24), qui ne comprend pas de clapet anti-retour manuel.

9. Système de freinage hydraulique selon l'une quelconque des revendications précédentes, dans lequel le système de freinage hydraulique est configuré pour être disposé dans une nacelle de génératrice éolienne, et dans lequel le système de freinage hydraulique comprend une unité hydraulique unique (18) et une pluralité d'étriers de frein (16, 30, 32) coopérant avec un disque de frein (14) qui est couplé à un arbre de la génératrice éolienne, dans lequel la pluralité d'étriers de frein (16, 30, 32) est actionnée à l'aide de l'unité hydraulique unique (18) pour fournir un système de freinage central de l'arbre.

10. Génératrice éolienne comprenant un arbre qui est couplé à un moyeu de rotor, **caractérisée par** un système de freinage hydraulique selon l'une quelconque des revendications précédentes.

11. Génératrice éolienne selon la revendication 10, possédant un système de freinage hydraulique comprenant une pluralité d'étriers de frein coopérant avec un disque de frein qui est couplé à l'arbre, dans laquelle la pluralité d'étriers de frein est actionnée à l'aide d'une unité hydraulique unique pour fournir un système de freinage central de l'arbre.

12. Génératrice éolienne selon la revendication 11, dans laquelle la pluralité des étriers de frein (16, 30, 32) sont espacés de manière équidistante autour du disque de frein (14).

13. Génératrice éolienne selon la revendication 10, comprenant une pluralité d'étriers de frein (16, 30, 32), dans laquelle la soupape de purge d'air automatique (24) est disposée au niveau de l'étrier de frein (30, 32) le plus haut et, en particulier, une différence de hauteur entre l'étrier de frein (30, 32) le plus haut et l'unité hydraulique est supérieure à 2 m, 3 m ou 4 m, et en particulier supérieure à 4,5 m.

14. Génératrice éolienne selon la revendication 10, comprenant une pluralité de soupapes de purge d'air automatique (24) qui sont disposées au-dessus de l'unité hydraulique (18).

15. Génératrice éolienne selon la revendication 14, dans laquelle le circuit de freinage est un circuit de freinage multiple comprenant au moins un premier circuit de freinage et un deuxième circuit de freinage, dans laquelle l'un respectif des circuits de freinage comprend au moins un étrier de frein (16, 30, 32) et une soupape de purge d'air automatique (24).

16. Génératrice éolienne selon la revendication 15, dans laquelle le système de freinage hydraulique est un système de freinage à disque comprenant une pluralité d'étriers de frein (16, 30, 32) qui coopèrent avec le disque de freinage (14), dans laquelle les étriers de frein (16, 30, 32) sont espacés de manière équidistante autour du disque de freinage (14), dans laquelle les étriers de frein (30) du premier circuit de freinage et les étriers de frein (32) du deuxième circuit de freinage sont disposés de manière à être opposés l'un à l'autre par rapport au disque de freinage (14).

17. Génératrice éolienne selon l'une quelconque des revendications 10 à 16, dans laquelle le circuit de freinage hydraulique fournit une connexion fluidique directe et continue entre l'unité hydraulique (18) et l'au moins un étrier de frein (16, 30, 32), en particulier le circuit de freinage hydraulique fournit une connexion fluidique entre l'unité hydraulique (18) et l'au moins un étrier de frein (16, 30, 32), qui ne comprend pas de clapet anti-retour manuel.
